Europäisches Patentamt

European Patent Office

Office européen des brevets

(11) Publication number: **0 121 280**
**B1**

(12) **EUROPEAN PATENT SPECIFICATION**

(45) Date of publication of patent specification: 20.06.90

(51) Int. Cl.⁵: **A 01 F 15/00**

(21) Application number: **84200432.7**

(22) Date of filing: **27.03.84**

(54) Apron reverse drive mechanism for a roll baling machine.

(30) Priority: **30.03.83 US 480622**

(43) Date of publication of application:
**10.10.84 Bulletin 84/41**

(45) Publication of the grant of the patent:
**20.06.90 Bulletin 90/25**

(84) Designated Contracting States:
**DE FR GB IT**

(56) References cited:
**FR-A-2 220 176**
**GB-A-2 045 155**
**US-A-4 208 862**
**US-A-4 218 866**

(73) Proprietor: **FORD NEW HOLLAND, INC. (a Delaware corp.)**
**500 Diller Avenue**
**New Holland Pennsylvania 17557 (US)**

(72) Inventor: **Hale, John K.**
**591 Valley View Drive**
**New Holland, PA 17557 (US)**
Inventor: **Wagstaff, Robert A.**
**2590 Ponderosa Drive**
**Lancaster, PA 17601 (US)**
Inventor: **Campbell, Willis R.**
**Route 4**
**Ephrata, PA 17522 (US)**
Inventor: **Bigelow, Donald O.**
**Route 2, Box 469**
**New Holland, PA 17557 (US)**

(74) Representative: **Vandenbroucke, Alberic T.J.**
**FORD NEW HOLLAND N.V. Leon Claeysstraat 3A**
**B-8210 Zedelgem (BE)**

Courier Press, Leamington Spa, England.

## Description

In a roll baling machine such as disclosed in US—A—4,208,862, a bale forming apron is driven in a reverse direction to facilitate bale ejection. A belt which is used to drive the apron in the reverse direction is always under tension and is always moving even when the apron is driven in a normal direction for bale formation. Consequently, the wear on the belt increases.

The present invention overcomes this problem by providing a mechanism that permits the belt used for driving the apron in the reverse direction to be slackened during bale formation and then tensioned only during bale ejection in order to drive the apron in the reverse direction.

Specifically, the invention provides a round baler which comprises:

a base frame;

a movable frame pivotally connected to the base frame for movement between a lower, bale forming position and an upper, bale discharge position;

bale forming means supported on the base frame and the movable frame;

first drive means operatively associated with the bale forming means and including first drive engaging means operatively connected to the movable frame for, when this movable frame assumes its lower, bale forming position, engaging said first drive means to drive the bale forming means in a first direction to form a cylindrical bale of crop material in the machine and, when the movable frame is pivoted to its upper, bale discharge position, disengaging said first drive means; and

second drive means operatively associated with the bale forming means and including belt means and second drive engaging means formed by idler means disposed to cooperate with the belt means; said idler means being operatively connected to the movable frame in a manner such that, when this movable frame assumes its upper, bale discharge position, this movable frame places the idler means in a first position making the second drive means operative to drive the bale forming means in a second direction opposite to the first direction to thereby facilitate bale ejection and, when the movable frame is pivoted to its lower, bale forming position, this movable frame displaces the idler means to a second position in which said drive of the bale forming means in said second direction is interrupted, and which is characterized in that:

the belt means of the second drive means are slack when, during bale formation, the movable frame is in its lower position placing the idler means in said second position, this slack preventing said belt means from transmitting motive power to the bale forming means, and

during bale ejection, pivotal movement of the movable frame toward its upper position, causes the idler means, while moving to said first position, to tension the belt means of the second drive means to thereby transmit motive power to the bale forming means for driving said bale forming means in said second direction.

In a preferred embodiment, the first and second drive means comprise common input and output shafts with the common output shaft being drivingly coupled to the bale forming means. Also, the first drive means equally comprise belt means which operatively extend between input and output pulleys mounted on respectively said common input and output shafts. The drive engaging means of the first drive means equally are formed by idler means which are movable between a retracted, drive disengaging position and an operative position in which the belt means of these first drive means are tensioned to transmit motive power. Said idler means of the first drive means are operatively coupled to the movable frame so as to assume the operative, drive engaging position when the movable frame is in its lower position and so as to assume the retracted, inoperative position when the movable frame is in its upper position.

The second drive means of this preferred embodiment further also include drive reversing means alongside the belt means thereof. These belt means and drive reversing means of the second drive means extend between said common input and output shafts and are operable, when the idler means of said second drive means are in the drive engaging position, to receive motive power from the common input shaft and to transmit this motive power in said second direction to the output shaft.

A round baler in accordance with, the present invention will now be described in greater detail, by way of example, with reference to the accompanying drawings, in which:

Fig. 1 is a side elevation view of a roll baling machine embodying the present invention with the parts of the machine shown in their positions for bale formation;

Fig. 2 is a side elevation view of the machine of Fig. 1 with the parts of the machine shown in their positions for bale ejection;

Fig. 3 is an enlarged partial view of Fig. 1;

Fig. 4 is an enlarged partial view of Fig. 2;

Fig. 5 is a sectional view taken along the lines 5—5 of Fig. 4.

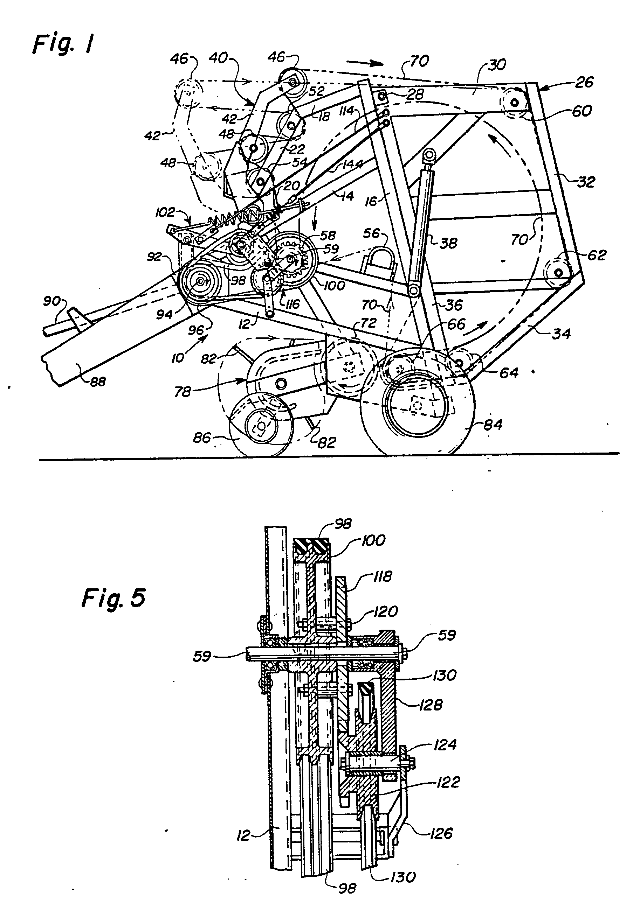

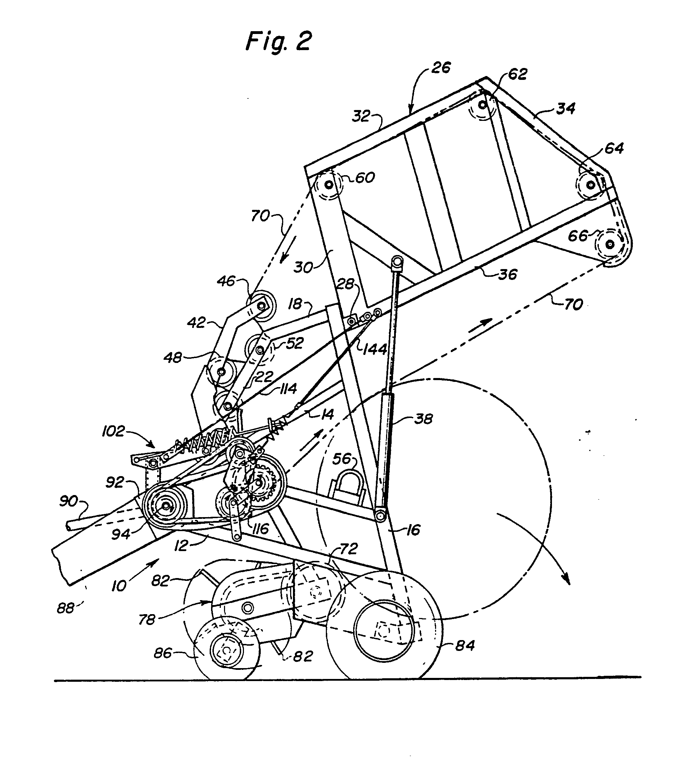

Referring to Fig. 1, a typical baling machine embodying the preferred embodiment of the present invention includes a base frame 10 having opposite sides each formed generally of frame members 12, 14, 16 rigidly connected in a triangular configuration with side plates substantially covering the space therebetween. Each side of the base frame 10 includes an upper section, which consists of a frame member 18 rigidly connected to the frame member 16, a bracket 20 rigidly connected to frame member 14, and a frame member 22 rigidly connected between the frame member 18 and the bracket 20. A plate is connected to and covers the space between the frame members 14, 16, 18 and 22. A rear frame 26 is pivotally connected at 28 to the base frame 10 by suitable bearings. The rear frame 26 has opposite sides each formed generally of frame members 30, 32, 34, 36 rigidly connected in a substantially trapezoidal configuration with side plates substantially covering the space therebetween. Other frame members (not shown) extend transversely of the machine and connect the opposite sides of the base frame 10 and the opposite sides of the rear frame 26. The rear frame 26 is pivotally movable from the lower position shown in full lines in Fig. 1 to an upper position shown in Fig. 2 by hydraulic cylinders 38 mounted at the sides of the machine connected at their lower ends to the base frame 10 and at their upper ends to the rear frame 26.

An arm assembly 40 is rotatably mounted on the base frame 10 for rotational movement between a forward position shown in phantom lines in Fig. 1 and a rearward position shown in full lines in Fig. 1. The arm assembly 40 includes arms 42 disposed inboard the sides of the machine. The arms 42 are rigidly connected to a cross tube that is rotatably mounted in suitable bearing members carried by the brackets 20 on the opposite sides of the base frame 10. The arm assembly 40 is normally urged toward its forward position preferably by conventional means such as extension or compression springs (not shown) connected between the arm assembly 40 and the base frame 10. The arm assembly 40 carries rotatable guide members 46 and 48 on its arms 42. The base-frame 10 supports rotatable guide members 52, 54 and cam guide members 56 inboard its opposite sides. The cam guide members 56 extend through openings formed in the opposite sides of the base frame 10. Sprockets 58 are provided inboard the opposite sides of the base frame 10 and are fixed on a shaft 59 that is rotatably mounted in suitable bearings on the base frame 10. The rear frame 26 supports rotatable guide members 60, 62, 64, 66 inboard its opposite sides.

A flexible bale forming apron 70 is movably supported on the aforementioned guide members and sprockets. The apron 70 is preferably formed of a pair of endless link-type chains connected at spaced intervals by transverse bars or slats. The apron chains extend around and engage the various guide members and the sprockets 58. This apron 70 may be of the known type disclosed in U.S. Patent No. 3,901,007 and designated therein by the numeral "82". A floor roller 72 extends transversely of the machine and is rotatably supported by brackets on the opposite sides of the base frame 10. When the machine is empty, the upper surface of the floor roller 72 cooperates with a course of the apron 70 that extends upwardly and rearwardly from the guide members 66 over the cam guide members 56 and then downwardly and forwardly to the sprockets 58 to define an expandable bale chamber having an initial wedge shape in side elevation.

A pickup header 78 extends transversely of the machine and is supported by brackets on the opposite sides of the base frame 10. The pickup header 78 is preferably of conventional type having a series of projecting fingers 82 for engaging and picking up windrowed crop material. A pair of wheels 84 mounted on the opposite sides of the bases frame 10 support the machine. Another pair of wheels 86 support the pickup header 78. A tongue 88 is provided on the forward end of the base frame 10 for connection to a tractor.

As the machine is pulled across a field by a tractor, the pickup header fingers 82 engage, pick up and deliver windrowed crop material onto the upper surface of the rotating floor roller 72 in the bale chamber. The crop material is carried upwardly and then coiled back downwardly onto itself by the apron 70 which in its starting position moves upwardly and rearwardly from the guide members 66 over the cam guide members 56 and then downwardly and forwardly to the sprockets 58. This movement of the apron 70 in the bale chamber effectively starts the core of the roll bale. The roll bale increases in diameter lifting the inner course of the apron 70 that extends between the guide members 66 and the sprockets 58 off the cam guide members 56, and expanding the bale chamber from its initial wedge shape to a substantially circular shape. The expansion of the bale chamber results in expansion of the inner course of the apron 70 contacting the peripheral surface of the roll bale. This expansion of the inner course of the apron 70 is accomplished by rotation of the arm assembly 40 in a clockwise direction as viewed in Fig. 1, from its forward position. When it is desired to discharge a bale from the machine, the rear frame 26 is raised to its upper position as shown in Fig. 2.

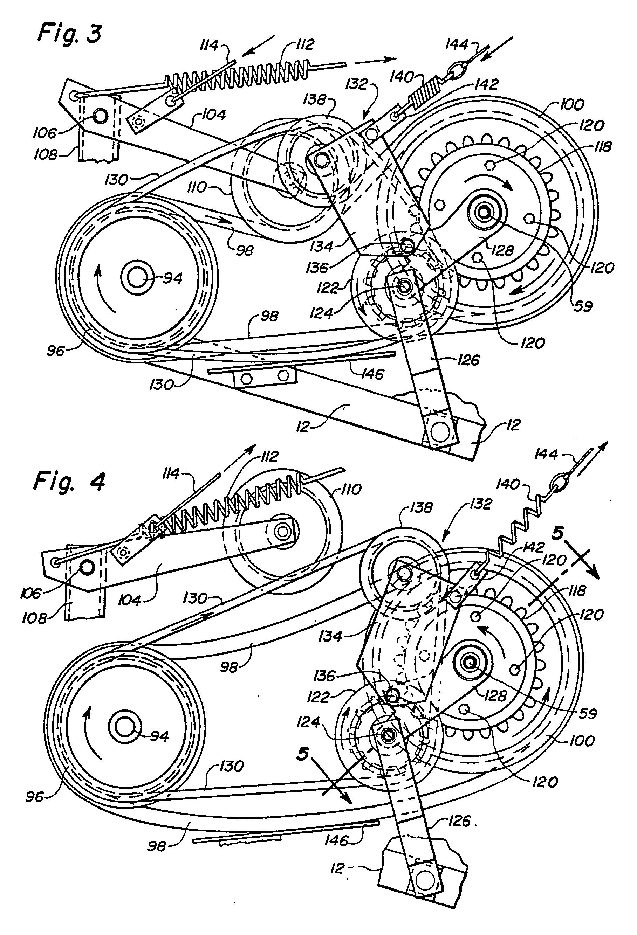

An input shaft 90 is supported on the tongue 88 and is connectable at one end to the power take off (PTO) of a tractor (not shown). The other end of the input shaft 90 is connected through a gear box 92 to a transverse output shaft 94. A sheave 96 is fixed on the shaft 94 and is connected by a belt 98 to another sheave 100 fixed on the shaft 59. An idler mechanism 102 is provided to tension the belt 98 in order to drivingly connect the sheaves 96 and 100. As best seen in Figs. 3 and 4, the idler mechanism 102 includes an arm 104 pivoted by a pin 106 on a bracket 108 that is carried on the base frame 10. The arm 104 carries a rotatable sheave 110 in position for engaging the belt 98. A spring 112 is connected at one end to the arm 104 and at the other end to a bracket on the base frame 10. A cable 114 is connected at one end to the arm 104 and at the other end to a pin on the rear frame 26. When the rear frame 26 is in the lower position of Fig. 1, the spring 112 urges the arm 104 in a direction to firmly engage the sheave 110 with the belt 98. This tightens the belt 98 and provides a driving connection between the sheaves 96, 100 via the belt 98. At the same time, the cable 114 is slack and thus has no effect on the position of the arm 104. When the rear frame 26 is raised to the upper position of Fig. 2, the cable 114 is pulled tight and as a result pulls the arm 104 in a direction against the force of the spring 112 so that the sheave 110 is moved out of engagement with the belt 98. This allows slack in the belt 98. and the sheave 100 is drivingly disconnected via the belt 98 from the sheave 96. As seen in Fig. 4, a bracket 146 secured to the base frame member 12 supports the slack belt 98 sufficiently to insure that it has no driving engagement with the sheaves 96 and 100.

Referring to Fig. 1, rotary driving power is delivered from the PTO of a tractor through the input shaft 90, the gear box 92, and the output shaft 94 to the sheave 96. This causes rotation of the sheave 100 in a clockwise direction via the belt 98, as viewed in Fig. 1, which in turn causes rotation of the sprockets 58 in the same direction thereby propelling the apron 70 in the normal direction indicated during bale formation. The floor roller 72 and the pickup header fingers 82 are also driven in the directions indicated in Fig. 1 by conventional means such as chains and sprockets preferably connected to the shaft 59.

According to the present invention, a mechanism 116 for driving the apron 70 in reverse direction includes a gear member 118 secured by bolts 120 to the sheave 100. A combination sheave-gear member 122 is rotatably mounted on a shaft 124. The shaft 124 is supported by a bracket 126 carried on the base frame member 12 and by a link member 128 which extends between and interconnects the shafts 59 and 124. The teeth of the gear member 118 are in meshing engagement with the teeth of the sheave-gear member 122. A belt 130 extends around the sheave 96 and the sheave-gear member 122, and an idler mechanism 132 is provided to tension the belt 130 to drivingly connect the sheave 96 with the sheave-gear member 122. The idler mechanism 132 includes an arm 134 pivotally mounted on the link member 128 by a pin 136. The arm 134 carries a rotatable sheave 138 disposed for engaging the belt 130. A spring 140 is connected at one end to a bracket 142 on the arm 134. A cable 144 is connected between the other end of the spring 140 and a pin on the rear frame 26. When the rear frame 26 is in the lower position of Fig. 1, the cable 144 is slack and the spring 140 is relaxed so that the idler mechanism 132 does not tension the belt 130 which is also slack. As seen in Fig. 3, the bracket 146 secured to the base frame member 12 supports the slack belt 130 sufficiently to insure that it has no driving engagement with either the sheave 96 or the sheave-gear member 122.

The slack belt 130 allows the sheave-gear member 122 to be freely rotated in a counterclockwise direction, as viewed in Fig. 3, by the sheave 100 which is rotated in a clockwise direction via the belt 98 to drive the apron 70 in normal direction for bale formation. When the rear frame 26 is moved to the upper position of Fig. 2, the arm 134 is pivoted, due to the cable 144, on the pin 136 so that the idler mechanism 132 tensions the belt 130 and provides a driving connection between the sheave 96 and the sheave-gear member 122. This causes the sheave 100 to be rotated in a counterclockwise direction, as viewed in Fig. 4, by the sheave-gear member 122 which is then rotated in a clockwise direction via the belt 130. Consequently, the apron 70 is driven in a reverse direction, as indicated in Fig. 2, by the sprockets 58 to facilitate bale ejection.

The foregoing description illustrates preferred embodiments of the invention. However, concepts employed may, based upon such description, be employed in other embodiments without departing from the scope of the invention. Accordingly, the following claims are intended to protect the invention broadly, as well as in the specific forms shown herein.

## Claims

1. A round baler comprising:
   a base frame (10);
   a movable frame (26) pivotally connected to the base frame (10) for movement between a lower, bale forming position and an upper, bale discharge position;
   bale forming means (70) supported on the base frame (10) and the movable frame (26);
   first drive means (96, 98, 100) operatively associated with the bale forming means (70) and including first drive engaging means (102) operatively connected to the movable frame (26) for, when this movable frame (26) assumes its lower, bale forming position, engaging said first drive means (96, 98, 100) to drive the bale forming means (70) in a first direction to form a cylindrical bale of crop material in the machine and, when the movable frame (26) is pivoted to its upper, bale discharge position, disengaging said first drive means (96, 98, 100); and
   second drive means (96, 130, 122, 118) operatively associated with the bale forming means (70) and including belt means (130) and second drive engaging means formed by idler means (138) disposed to cooperate with the belt means (130); said idler means (138) being operatively connected to the movable frame (26) in a manner such that, when this movable frame (26) assumes its upper, bale discharge position, this movable frame (26) places the idler means (138) in a first position making the second drive means (96, 130, 122, 118) operative to drive the bale forming means (70) in a second direction opposite to the first direction to thereby facilitate bale ejection and, when the movable frame (26) is pivoted to its lower, bale forming position, this movable frame (26) displaces the idler means (138) to a second position in which said drive of the bale forming means (70) in said second direction is interrupted, and characterized in that:
   the belt means (130) of the second drive means (96, 130, 122, 118) are slack when, during bale formation, the movable frame (26) is in its lower position placing the idler means (138) in said second position, this slack preventing said belt means (130) from transmitting motive power to the bale forming means (70), and
   during bale ejection, pivotal movement of the movable frame (26) toward its upper position, causes the idler means (138), while moving to said first position, to tension the belt means (130) of the second drive means (96, 130, 122, 118) to thereby transmit motive power to the bale forming means (70) for driving said bale forming means (70) in said second direction.

2. A round baler according to claim 1 characterized in that:

the first and second drive means (96, 98, 100 resp. 96, 130, 122, 118) comprise common input and output shafts (94 resp. 59) with the common output shaft (59) being drivingly coupled to the bale forming means (70);

the first drive means (96, 98, 100) equally comprise belt means (98) which operatively extend between input and output pulleys (96 resp. 100) mounted on respectively said common input and output shafts (94 resp. 59)

the drive engaging means of the first drive means (96, 98, 100) equally are formed by idler means (102) which are movable between a retracted, drive disengaging position and an operative position in which the belt means (98) of these first drive means (96, 98, 100) are tensioned to transmit motive power; said idler means (102) of the first drive means (96, 98, 100) being operatively coupled to the movable frame (26) so as to assume the operative, drive engaging position when the movable frame (26) is in its lower position and so as to assume the retracted, inoperative position when the movable frame (26) is in its upper position; and

the second drive means (96, 130, 122, 118) further also include drive reversing means (122, 118) alongside the belt means (130) thereof; said belt means (130) and said drive reversing means (122, 118) of the second drive means (96, 130, 122, 118) extending between said common input and output shafts (94 resp. 59) and being operable when the idler means (138) of said second drive means (96, 130, 122, 118) are in the drive engaging position, to receive motive power from the common input shaft (94) and to transmit this motive power in said second direction to the output shaft (59).

3. A round baler according to claim 2 characterized in that:

the belt means (130) of the second drive means (96, 130, 122, 118) operatively extend between an input pulley (96) secured on the common input shaft (94) and a further pulley (122) secured on an intermediate shaft (124) and

the drive reversing means comprise first and second drive members (122, 118) drivingly engaged with each other in a manner to reverse the direction of rotation therebetween; said first drive member (122) further being co-axially connected to said further pulley (122) on the intermediate shaft (124) and said second drive member (118) being co-axially and drivingly mounted on the common output shaft (59).

4. A round baler according to claim 3, characterized in that the first and second drive members of the second drive means (96, 130, 122, 118) are formed by intermeshing gears (122, 118).

5. A round baler according to any of the preceding claims, characterized in that the idler means (138) of the second drive engaging means are rotatably mounted on a pivot lever (134) which itself is pivotally mounted on the base frame (10) and which is coupled via a spring (140) and cable (144) to the movable frame (26); the arrangement being such that, when the movable frame (26) is in its lower, bale forming position, the spring and cable system (140, 144) is relaxed, whereby said idler means (138) are allowed to assume said second position resulting in the belt means (130) of said second drive means (96, 130, 122, 118) being slackened, and, when the movable frame (26) is in its upper position, the spring and cable system (140, 144) is tensioned, whereby, in turn, said idler means (138) are positioned in said first position resulting in the belt means (130) of the second drive means (96, 130, 122, 118) also being tensioned.

6. A round baler according to any of the claims 2 to 4 and claim 5 when appended to any of said claims 2 to 4 characterized in that:

spring means (112) are provided which urge the idler means (102) of the first drive engaging means towards the drive engaging position, and

coupling means (114) extend between said idler means (102) and the movable frame (26) to move these idler means (102) towards the retracted position as the movable frame (26) is pivoted to its upper, bale discharge position.

## Patentansprüche

1. Rundballenpresse mit
einem Grundrahmen (19),
einem beweglichen Rahmen (26), der schwenkbar mit dem Grundrahmen (10) für eine Bewegung zwischen einer unteren Rundballenformungsposition und einer oberen Ballenauswurfposition verbunden ist,
Ballenformungseinrichtungen (70), die auf dem Grundrahmen (10) und dem beweglichen Rahmen (26) gelagert sind,
ersten Antriebseinrichtungen (96, 98, 100), die betriebsmäßig mit den Rundballenformungseinrichtungen (70) verbunden sind und erste Antriebseinrückeinrichtungen (102) einschließen, die betriebsmäßig mit dem beweglichen Rahmen (26) derart verbunden sind, daß, wenn der bewegliche Rahmen (26) seine untere Rundballenformungsposition einnimmt, sie die ersten Antriebseinrichtungen (96, 98, 100) einrücken, um die Rundballenformungseinrichtungen (70) in einer ersten Richtung zur Bildung eines zylindrischen Ballens aus Erntematerial in der Maschine antreiben, während, wenn der bewegliche Rahmen (26) in seine obere Ballenauswurfstellung verschwenkt wird, sie die ersten Antriebseinrichtungen (96, 98, 100) ausrücken, und
zweiten Antriebseinrichtungen (96, 130, 122, 118), die betriebsmäßig den Rundballenformungseinrichtungen zugeordnet sind und Riemenelemente (130) und zweite Antriebseinrückeinrichtungen einschließen, die durch Leerlaufrolleneinrichtungen (138) gebildet sind, die so angeordnet sind, daß sie mit den Riemenelementen (130) zusammenwirken, wobei die Leerlaufrolleneinrichtungen (138) betriebsmäßig mit dem beweglichen Rahmen (26) derart verbunden sind, daß wenn dieser bewegliche Rahmen (26) seine obere Ballenauswurfposition einnimmt, dieser bewegliche Rahmen (26) die Leerlaufrolleneinrichtungen (138) in eine erste Position bringt, in der die zweiten Antriebseinrichtungen (96, 130, 122, 118) in Betrieb gesetzt werden, um die Ballenformungeinrichtungen (70) in einer zweiten Richtung entgegengesetzt zur ersten Richtung anzutreiben, um auf diese Weise den Ballenauswurf zu erleichtern, während, wenn der bewegliche Rahmen (26) in seine untere Rundballenformungsposition verschwenkt ist, dieser bewegliche Rahmen (26) die Leerlaufrolleneinrichtungen (138) in eine zweite Position verschwenkt, in der der Antrieb der Rundballenformungseinrichtungen (70) in der zweiten Richtung unterbrochen wird, dadurch gekennzeichnet, daß

die Riemenelemente (130) der zweiten Antriebseinrichtungen (96, 130, 122, 118) entspannt sind, wenn sich während der Rundballenformung der bewegliche Rahmen (26) in seiner unteren Position befindet, in der die Leerlaufrolleneinrichtungen (138) in die zweite Position gebracht werden, wobei diese Entspannung verhindert, daß die Riemenelemente (130) Antriebskraft auf die Rundballenformungseinrichtungen übertragen, und

während des Ballenauswurfs eine Schwenkbewegung des beweglichen Rahmens (26) in Richtung auf seine obere Position bewirkt, daß die Leerlaufrolleneinrichtungen (138) bei ihrer Bewegung in die erste Position die Riemenelemente (130) der zweiten Antriebseinrichtungen (96, 130, 122, 118) spannen, um auf diese Weise Antriebskraft auf die Rundballenformungseinrichtungen (70) zum Antrieb der Ballenformungseinrichtungen (70) in der zweiten Richtung zu übertragen.

2. Rundballenpresse nach Anspruch 1, dadurch gekennzeichnet, daß

die ersten und zweiten Antriebseinrichtungen (96, 98, 100 bzw. 96, 130, 122, 118) gemeinsame Eingangs- und Ausgangswellen (94 bzw. 59) aufweisen, wobei die gemeinsame Ausgangswelle (59) antriebsmäßig mit den Rundballenformungseinrichtungen (79) gekoppelt ist,

die ersten Antriebseinrichtungen (96, 98, 100) ebenfalls Riemenelemente (98) umfassen, die sich betriebsmäßig zwischen Eingangs- und Ausgangsriemenscheiben (96 bzw. 100) erstrecken, die auf den gemeinsamen Eingangs- und Ausgangswellen (94 bzw. 59) befestigt sind,

die Antriebseinrückeinrichtungen der ersten Antriebseinrichtungen (96, 98, 100) ebenfalls durch Leerlaufrolleneinrichtungen (102) gebildet sind, die zwischen einer zurückgezogenen, Antriebsausrückposition und einer Betriebsstellung beweglich sind, in der die Riemenelemente (98) dieser ersten Antriebseinrichtungen (96, 98, 100) gespannt sind, um Antriebsleistung zu übertragen, wobei die Leerlaufrolleneinrichtungen (102) der ersten Antriebseinrichtungen (96, 98, 100) betriebsmäßig mit dem beweglichen Rahmen (26) derart gekoppelt sind, daß sie die betriebsmäßige Antriebseinrückposition einnehmen, wenn sich der bewegliche Rahmen (26) in seiner unteren Stellung befindet, und daß sie die zurückgezogene außer Betrieb gesetzte Position einnehmen, wenn sich der bewegliche Rahmen (26) in seiner oberen Position befindet, und

die zweiten Antriebseinrichtungen (96, 130, 122, 118) weiterhin Antriebsumkehreinrichtungen (122, 118) längsseits zu deren Riemenelementen (130) einschließen, wobei die Riemenelemente (130) und die Antriebsumkehreinrichtungen (122, 118) der zweiten Antriebseinrichtungen (96, 130, 122, 118) sich zwischen den gemeinsamen Eingangs- und Ausgangswellen (94 bzw. 59) erstrecken und derart betätigbar sind, daß wenn die Leerlaufrolleneinrichtungen (138) der zweiten Antriebseinrichtungen (96, 130, 122, 118) in der Antriebseinrückposition sind, sie Antriebsleistung von der gemeinsamen Eingangswelle (94) empfangen und diese Antriebsleistung in der zweiten Richtung auf die Ausgangwelle (59) übertragen.

3. Rundballenpresse nach Anspruch 2, dadurch gekennzeichnet, daß

sich die Riemenelemente (130) der zweiten Antriebseinrichtungen (96, 130, 122, 118) betriebsmäßig zwischen einer auf der gemeinsamen Eingangswelle (94) befestigten Eingangsriemenscheibe (96) und einer weiteren auf einer Zwischenwelle (124) befestigten Riemenscheibe (122) erstrecken, und

die Antriebsumkehreinrichtungen erste und zweite Antriebselemente (122, 118) umfassen, die in Antriebseingriff miteinander derart stehen, daß sie die Drehrichtung zwischen sich umkehren, wobei das erste Antriebselement (122) weiterhin koaxial mit der weiteren Riemenscheibe (122) auf der Zwischenwelle verbunden ist und das zweite Antriebselement (118) koaxial und antriebsmäßig auf der gemeinsamen Ausgangswelle (59) befestigt ist.

4. Rundballenpresse nach Anspruch 3, dadurch gekennzeichnet, daß die ersten und zweiten Antriebselemente der zweiten Antriebseinrichtungen (96, 130, 122, 118) durch miteinander kämmende Zahnräder (122, 118) gebildet sind.

5. Rundballenpresse nach einem der vorhergehenden Ansprüche, dadurch gekennzeichnet, daß die Leerlaufrolleneinrichtungen (138) der zweiten Antriebseinrückeinrichtungen drehbar auf einem Schwenkhebel (134) befestigt sind, der seinerseits schwenkbar auf dem Grundrahmen (10) befestigt und über eine Feder (140) und einen Seilzug (144) mit dem beweglichen Rahmen (26) gekoppelt ist, und daß die Anordnung derart ist, daß, wenn sich der bewegliche Rahmen (26) in seiner unteren Rundballenformungsposition befindet, das Feder- und Seilzugsystem (149, 144) entlastet ist, sodaß die Leerlaufrolleneinrichtungen (138) die zweite Position einnehmen können, was dazu führt, daß die Riemenelemente (130) der zweiten Antriebseinrichtungen (96, 130, 122, 118) entspannt sind, während, wenn sich der bewegliche Rahmen (26) in seiner oberen Position befindet, das Feder- und Seilzugsystem (140, 144) gespannt ist, wodurch andererseits die Leerlaufrolleneinrichtungen (138) auf die erste Position eingestellt sind, was dazu führt, daß die Riemenelemente (130) der zweiten Antriebseinrichtungen (96, 130, 122, 118) ebenfalls gespannt sind.

6. Rundballenpresse nach einem der Ansprüche 2 bis 4 und 5 unter Rückbeziehung auf einen der Ansprüche 2 bis 4, dadurch gekennzeichnet, daß

Federeinrichtungen (112) vorgesehen sind, die die Leerlaufrolleneinrichtungen (102) der ersten Antriebseinrückeinrichtungen in Richtung auf die Antriebseinrückposition vorspannen, und

sich Kupplungseinrichtungen (114) zwischen den Leerlaufrolleneinrichtungen (102) und dem beweglichen Rahmen (26) erstrecken, um diese Leerlaufrolleneinrichtungen (102) in die zurückgezogene Stellung zu bewegen, wenn der bewegliche Rahmen (26) in Richtung auf seine obere Ballenauswurfstellung verschwenkt wird.

**Revendications**

1. Ramasseuse-presse à balles rondes comprenant:

un châssis de base (10);

un châssis mobile (26) relié de façon pivotante au châssis de base (10) pour un mouvement entre une position inférieure de formation de balles et une position supérieure de déchargement de balles;

des moyens de formation de balles (70) montés sur le châssis de base (10) et le châssis mobile (26);

des premiers moyens d'entraînement (96, 98, 100) associés d'une manière fonctionnelle aux moyens de formation de balles (70) et comprenant des premiers moyens d'accouplement d'entraînement (102) reliés d'une manière fonctionnelle au châssis mobile (26) pour, quand celui-ci occupe sa position inférieure de formation de balles, accoupler lesdits premiers moyens d'entraînement (96, 98, 100) afin d'entraîner les moyens de formation de balles (70) dans une première direction, en vue de former une balle cylindrique de produits de récolte dans la machine, et pour, quand le châssis mobile (26) pivote vers sa position supérieure de déchargement de balles, désaccoupler lesdits premiers moyens d'entraînement (96, 98, 100); et

des seconds moyens d'entraînement (96, 130, 122, 118) associés d'une manière fonctionnelle aux moyens de formation de balles (70) et comprenant un moyen formant courroie (130) et des seconds moyens d'accouplement d'entraînement formés par un moyen formant galet-tendeur (138) placé de façon à coopérer avec le moyen formant courroie (130); ledit moyen formant galet-tendeur (138) étant relié d'une manière fonctionnelle au châssis mobile (26) de telle sorte que celui-ci, lorsqu'il occupe sa position supérieure de déchargement de balles, amène le moyen formant galet-tendeur (138) dans une première position rendant les seconds moyens d'entraînement (96, 130, 122, 118) opérationnels pour entraîner les moyens de formation de balles (70) dans une seconde direction opposée à la première pour faciliter ainsi l'éjection des balles, et que le châssis mobile (26), lorsqu'il est amené par pivotement à sa position inférieure de formation de balles, déplace le moyen formant galet tendeur (138) vers une seconde position dans laquelle ledit entraînement des moyens de formation de balles (70) dans ladite seconde direction est interrompu, et caractérisé en ce que:

le moyen formant courroie (130) des seconds moyens d'entraînement (96, 130, 122, 118) est détendu lorsque, pendant la formation des balles, le châssis mobile (26) est dans sa position inférieure, plaçant le moyen formant galet-tendeur (138) dans ladite seconde position, cette détente empêchant le moyen formant courroie (130) de transmettre une force d'entraînement aux moyens de formation de balles (70), et

pendant l'éjection des balles, le mouvement pivotant du châssis mobile (26) vers sa position supérieure fait que le moyen formant galettendeur (138), en même temps qu'il se déplace vers ladite première position, tend le moyen formant courroie (130) des seconds moyens d'entraînement (96, 130, 122, 118) pour transmettre ainsi une force d'entraînement aux moyens de formation de balles (70) afin d'entraîner lesdits moyens de formation de balles (70) dans ladite seconde direction.

2. Ramasseuse-presse à balles rondes selon la revendication 1, caractérisée en ce que:

les premiers et seconds moyens d'entraînement (96, 98, 100, resp. 96, 130, 122, 118) comprennent des arbres d'entrée et de sortie communs (94, resp. 59), l'arbre de sortie commun (59) étant accouplé dans une relation d'entraînement avec les moyens de formation de balle (70);

les premiers moyens d'entraînement (96, 98, 100) comprennent également un moyen formant courroie (98) qui s'étend d'une manière fonctionnelle entre des poulies d'entrée et de sortie (96, resp. 100) montées respectivement sur lesdits arbres d'entrée et de sortie communs (94, resp. 59);

les moyens d'accouplement d'entraînement des premiers moyens d'entraînement (96, 98, 100) sont également formés par un moyen formant galet-tendeur (102) mobile entre une position de désaccouplement d'entraînement rétractée et une position active dans laquelle le moyen formant courroie (98) de ces premiers moyens d'entraînement (96, 98, 100) est tendu afin de transmettre une force motrice; ledit moyen formant galettendeur (102) des premiers moyens d'entraînement (96, 98, 100) étant accouplé d'une manière fonctionnelle avec le châssis mobile (26) de façon à occuper la position active d'accouplement d'entraînement lorsque le châssis mobile (26) est dans sa position inférieure et à occuper la position rétractée inactive lorsque le châssis mobile (26) est dans sa position supérieure; et

les seconds moyens d'entraînement (96, 130, 122, 118) comprennent aussi des moyens inverseurs d'entraînement (122, 118) le long de leur moyen formant courroie (130), ledit moyen formant courroie (130) et lesdits moyens inverseurs d'entraînement (122, 118) des seconds moyens d'entraînement (96, 130, 122, 118) s'étendant entre lesdits arbres d'entrée et de sortie communs (94, resp. 59) et pouvant fonctionner, quand le moyen formant galet-tendeur (138) desdits seconds moyens d'entraînement (96, 130, 122, 118) est en position d'accouplement d'entraînement, pour recevoir la force motrice provenant de l'arbre d'entrée commun (94) et pour transmettre cette force à l'arbre de sortie (59) dans ladite seconde direction.

3. Ramasseuse-presse à balles rondes selon la revendication 2, caractérisée en ce que:

le moyen formant courroie (130) des seconds moyens d'entraînement (96, 130, 122, 118) s'étend d'une manière fonctionnelle entre une poulie d'entrée (96) fixée sur l'arbre d'entrée (94) et une autre poulie (122) fixée sur un arbre intermédiaire (124), et

les moyens inverseurs d'entraînement comprennent des premier et second éléments d'entraînement (122, 118) accouplés l'un avec l'autre dans une relation d'entraînement, de façon à intervertir leur sens de rotation; ledit premier élément d'entraînement (122) étant également relié de façon coaxiale à ladite autre poulie (122) sur l'arbre intermédiaire (124) et ledit second élément d'entraînement (118) étant monté de façon coaxiale et dans une relation d'entraînement sur l'arbre de sortie (59).

4. Rammasseuse-presse à balles rondes selon la revendication 3, caractérisée en ce que les premier et second éléments d'entraînement des seconds moyens d'entraînement (96, 130, 122, 118) sont formés par des pignons (122, 118) en prise entre eux.

5. Ramasseuse-presse à balles rondes selon l'une quelconque des revendications précédentes, caractérisée en ce que le moyen formant galet-tendeur (138) des seconds moyens d'accouplement d'entraînement est monté d'une manière rotative sur un levier pivotant (134) monté lui-même d'une manière pivotante sur le châssis de base (10) et accouplé, par l'intermédiaire d'un ressort (140) et d'un câble (144), avec le châssis mobile (26); la disposition étant telle que, lorsque le châssis mobile (26) est dans sa position inférieure de formation de balles, le système de ressort et de câble (140, 144) est détendu, moyennant quoi ledit moyen formant galet-tendeur (138) peut occuper ladite seconde position, ce qui entraîne la détente du moyen formant courroie (130) desdits seconds moyens d'entraînement (96, 130, 122, 118), et que, lorsque le châssis mobile (26) est dans sa position supérieure, le système de ressort et de câble (140, 144) est tendu, moyennant quoi, à son tour, ledit moyen formant galet-tendeur (138) se trouve pas conséquent dans ladite première position, ce qui entraîne la tension également du moyen formant courroie (130) des seconds moyens d'entraînement (96, 130, 122, 118).

6. Ramasseuse-presse à balles rondes selon l'une quelconque des revendications 2 à 4 et selon la revendication 5 lorsque celle-ci est dépendante de l'une desdites revendications 2 à 4, caractérisée en ce que:

un moyen formant ressort (112) est prévu pour solliciter le moyen formant galet-tendeur (102) des premier moyens d'accouplement d'entraînement vers la position d'accouplement d'entraînement, et

des moyens d'accouplement (114) s'étendent entre ledit moyen formant galet-tendeur (102) et le châssis mobile (26) pour amener ce moyen formant galet-tendeur (102) vers la position rétractée lorsque le châssis mobile (26) pivote vers sa position supérieure de déchargement de balles.

Fig. 1

Fig. 5

1

*Fig. 2*

2

Fig. 3

Fig. 4